# EUROPÄISCHE PATENTSCHRIFT

(11) **EP 1 481 998 B1**
(45) Veröffentlichungstag und Bekanntmachung des Hinweises auf die Patenterteilung: **02.09.2009**
(21) Anmeldenummer: 04011891.1
(22) Anmeldetag: 19.05.2004
(51) Int. Cl.: C08G 18/08, C08G 18/42, C08G 18/66, C09D 175/04, C08G 18/73, C08G 18/75, C09D 175/00

(54) **Wässrige PUR-Dispersionen zur Herstellung von Beschichtungen mit Softfeel-Effekt**
Aqueous PUR-dispersions for the preparation of coatings with soft-feel effect.
Dispersions aqueuses PUR pour la préparation de revêtements ayant un effet 'soft-feel'

(30) Priorität: 30.05.2003 DE 10324306
(43) Veröffentlichungstag der Anmeldung: 01.12.2004
(73) Patentinhaber: Bayer MaterialScience AG, 51368 Leverkusen (DE)
(72) Erfinder: Münzmay, Thomas, Dr., 41539 Dormagen (DE); Melchiors, Martin, Dr., 42799 Leichlingen (DE); Meixner, Jürgen, Dr., 47083 Krefeld (DE); Halpaap, Reinhard, Dr., 51519 Odenthal (DE); Pohl, Torsten, Dr., 50670 Köln (DE); Klippert, Uwe, 51399 Burscheid (DE)

(56) Entgegenhaltungen:
- EP-A- 0 282 072
- EP-A- 0 978 549
- DE-A1- 2 221 751
- DE-A1- 2 310 055
- DE-A1- 4 406 159
- Römpp Online, Version 2.13: Ester

## Beschreibung

Die Erfindung betrifft neue Überzugsmittel auf Basis wässriger Polyurethan-Dispersionen, ein Verfahren zu ihrer Herstellung und deren Verwendung zur Herstellung von Softfeel-Beschichtungen mit geringen Fog- und VOC-Werten.

Ionisch modifizierte Polyurethane (PUR) und deren wässrige Zubereitungen sind im Stand der Technik vielfältig beschrieben. Eine Übersicht verschiedener wässriger PUR-Typen und von Verfahren zu deren Herstellung sind beispielsweise in "Houben-Weyl: Methoden der Organischen Chemie, Band E 20, S. 1659-1692" oder in "Ullmann's Encyclopedia of Industrial Chemistry (1992) Vol. A21, S. 677-682" beschrieben. Sie finden aufgrund ihrer mechanischen Festigkeit, hohen Haftung zu unterschiedlichen Substraten, Lösemittelbeständigkeit sowie ihrem Glanz breite Verwendung z.B. in der Kunststofflackierung.

Bei Verwendung von Kunststoffteilen beispielsweise im Automobil-Innenraum tritt jedoch der sogenannte "Fogging-Effekt" oder "Fog" auf. Darunter wird die Bildung eines stark Licht brechenden Beschlags verstanden, der an den Innenflächen von Glasscheiben insbesondere der Frontscheibe auftritt. Auslöser sind in den Kunststoffteilen enthaltene niedermolekulare Bestandteile, die im Laufe der Zeit begünstigt durch Sonneneinstrahlung und Wärme migrieren und sich auf den Innenflächen der Scheiben niederschlagen. Eine wesentliche Verminderung dieses Effektes kann durch den Einsatz "fogging-armer" Polyurethane erreicht werden, wie sie beispielsweise in den EP-A 579 988, US-A 5,545,675 oder EP-A 1 153 951 beschrieben werden.

Um die haptischen Eigenschaften von Kunststoffteilen besonders im Automobilinnenraum zu verbessern, werden in den letzten Jahren vermehrt sogenannte Softfeel- Lacke zur Beschichtung eingesetzt.

"Softfeel-Effekt" im Sinne der vorliegenden Erfindung bezeichnet ein besonderes Griffempfinden (Haptik) der lackierten Oberfläche; diese Haptik lässt sich mit Begriffen wie samtig, weich, gummiartig, warm umschreiben, während sich z.B. die Oberfläche einer lackierten Auto-Karosse oder auch eine unlackierte oder mit einem üblichen Klar- oder Decklack beschichtete KunststoffPlatte z.B. ABS, Makrolon® (Polycarbonat, Bayer AG) oder Plexiglas® (Polymethylmethacrylat) kalt und glatt anfühlt. Dem Trend folgend, Emissionen von Lösemitteln in die Umwelt zu vermeiden, haben sich in den letzten Jahren wässrige Softfeel-Lacke auf Basis der Polyurethanchemie durchgesetzt, wie sie beispielhaft die Lehre der DE-A 44 06 159 offenbart wurden. Diese Lacke ergeben neben einem ausgezeichneten Softfeel-Effekt auch Beschichtungen mit guter Beständigkeit und Schutzwirkung für das Kunststoffsubstrat. Inzwischen hat sich aber gezeigt, dass auch diese Lacke und Beschichtungen nicht zuletzt wegen ihres verstärkten Einsatzes im Automobilinnenraum einen nennenswerten Beitrag zum "Fogging"-Effekt leisten.

In der EP-A 0978549 werden Softfeel-Lacke auf Basis von wasserverdünnbaren Bindemittel A offenbart, wobei diese aus einer Kombination aus Hydroxylgruppen-haltigen Polymeren (z.B. Polyurethan-Harnstoffe) bestehen. Eine zusätzliche Reinigung der einzusetzenden Polyhydroxlverbindung wird jedoch nicht offenbart. Dies führt zu dem unerwünschten "Fogging-Fffekt".

Fogging-arme Sofifeel-Lacke auf Basis wässriger Polyurethan-Systeme sind derzeit nicht bekannt, so dass die Aufgabe der vorliegenden Erfindung bestand, neue wässrige Beschichtungsmittel zur Herstellung von Softfeel-Beschichtungen mit besonders niedrigen Fog- und VOC-Werten bereitzustellen.

Die der Erfindung zugrundeliegende Aufgabe konnte nun durch Einsatz spezieller destillativ vorbehandelter Polyesterpolyole gelöst werden.

Gegenstand der vorliegenden Erfindung sind wässrige Beschichtungsmittel, enthaltend
A) mindestens eine wässrige Zubereitung eines ionisch modifizierten, Polyurethans oder/und Polyurethanhamstoffes, mit einem OH-Zahl von weniger als 6 mg KOH/g,
B) mindestens eine wässrige Zubereitung eines ionisch modifizierten, Hydroxylgruppen haltigen Polyurethans oder/ und Polyurethanharnstoffes und
C) mindestens einen Vernetzer,
D) gegebenenfalls Hilfsmittel und Zusatzstoffe
dadurch gekennzeichnet, dass die Komponente A) aufgebaut ist aus
A1) einer oder mehreren Polyhydroxylverbindungen mit einem zahlenmittleren Molekulargewicht (Mₙ) ≥ 500 Dalton und einer OH-Funktionalität von ≥ 1,5, von denen mindestens eine bei einer Temperatur ≥ 50°C und einem Druck ≤10 mbar von unter diesen Destillationsbedingungen flüchtigen Komponenten befreit wurde,
A2) gegebenenfalls einer oder mehreren Polyhydroxylverbindungen mit einem zahlenmittleren Molekulargewicht (Mₙ) von 62 bis 499 Dalton und einer OH-Funktionalität von ≥ 2,
A3) gegebenenfalls einer oder mehreren hydrophilen Verbindungen mit einem Ethylenoxidgehalt größer 50 Gew.-% und einem zahlenmittleren Molekulargewicht (Mₙ) größer 400 Dalton, die mindestens eine NCO-reaktive Gruppe aufweisen,
A4) einem oder mehreren Polyisocyanaten,
A5) gegebenenfalls einem oder mehreren aliphatischen Polyaminen mit einem zahlenmittleren Molekulargewicht (Mₙ) von 60 bis 300 Dalton und mindestens zwei primären oder sekundären Aminogruppen oder Hydrazin und
A6) einer oder mehreren Verbindungen, die mindestens ein mit NCO-Gruppen reaktives Wasserstoffatom oder mindestens eine NCO-Gruppe und zugleich mindestens eine ionische oder potentiell ionische Gruppe aufweisen und verschieden von den vorstehend genannten Verbindungen der Komponenten A1) - A5) sind
sowie ein Verfahren zu deren Herstellung.

Unter im wesentlichen Hydroxylgruppen frei im Sinne der vorliegenden Erfindung wird eine OH-Zahl von weniger als 6 mg KOH/g, bevorzugt weniger als 2,5 mg KOH/g verstanden.

Unter ionischen Gruppen im Rahmen der vorliegenden Erfindung werden funktionelle Gruppen verstanden, die eine positive oder negative Ladung tragen wie z.B. -COO⁻, -SO₃⁻, -NR₂H⁺, -NH₃⁺.

Unter potentiell ionischen Gruppen im Rahmen der vorliegenden Erfindung werden funktionelle Gruppen mit kovalenten Bindungen verstanden, die in Abhängigkeit vom pH-Wert ihrer Lösung durch Basen- oder Säurezugabe leicht in die entsprechenden Salze überführbar sind, z.B. -COOM, - SO₃M (mit M = H, NR₄⁺, Metallion) oder -NR₂/ -NR₂H⁺, oder -NH₂/-NH₃⁺.

Als Verbindungen der Komponente A1) werden bevorzugt organische Verbindungen mit einem zahlenmittleren Molekulargewicht (Mₙ) von 500 bis 10 000 Dalton, besonders bevorzugt 600 bis 5 000 Dalton, ganz besonders bevorzugt 1000 bis 3000 Dalton und einer mittleren HydroxylFunktionalität von bevorzugt 1,5 bis 6, besonders bevorzugt 1,8 bis 3 eingesetzt.

Besonders bevorzugt handelt es sich bei den Verbindungen der Komponente A1) um Verbindungen der vorstehend genannten Art auf Polyester-, Polylacton- oder Polycarbonat-Basis bzw. der bekannten Mischpolymerisate.

Die erfindungsgemäß als A1) einzusetzenden Verbindungen werden vor ihrer Verwendung destillativ von flüchtigen Komponenten befreit. Diese Destillation erfolgt bevorzugt kontinuierlich in einem Dünnschichtverdampfer bei Temperaturen ≥150°C, bevorzugt bei 170-230°C, besonders bevorzugt bei 180-220°C, unter einem vermindertem Druck von ≤10 mbar, bevorzugt ≤2 mbar, besonders bevorzugt ≤0,5 mbar. Niedermolekulare, nichtreaktive flüchtige Anteile werden unter diesen Bedingungen aus der Polyhydroxylverbindung abgetrennt. Bei der Destillation werden flüchtige Anteile von 0,2 - 15 Gew.-%, bevorzugt 0,5 ― 10 Gew.-%, besonders bevorzugt 1 - 6 Gew.-% abgetrennt.

Geeignete Polyesterpolyole der Komponente A1) sind lineare Polyesterdiole oder verzweigte Polyesterpolyole, wie sie in bekannter Weise aus aliphatischen, cycloaliphatischen oder aromatischen Di- oder Polycarbonsäuren bzw. ihren Anhydriden, wie z.B. Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal- oder Trimellitsäure sowie Säureanhydride, wie o-Phthal-, Trimellit- oder Bernsteinsäureanhydrid oder deren Gemischen durch Reaktion mit mehrwertigen Alkoholen, wie z.B. Ethandiol, Di-, Tri-, Tetraethylenglykol, 1,2-Propandiol, Di-, Tri-, Tetrapropylenglykol, 1,3-Propandiol, 1,4-Butandiol, 1,3-Butandiol, 2,3-Butandiol, 1,5-Pentandiol, 1,6-Hexandiol, 2,2-Dimethyl-1,3-propandiol, 1,4-Dihydroxycyclohexan, 1,4-Dimethylolcyclohexan, 1,8-Octandiol, 1,10-Decandiol, 1,12-Dodecandiol, 2,2,4- und/oder 2,4,4-Trimethyl-1,3-pentandiol oder deren Gemischen, gegebenenfalls unter Mitverwendung untergeordneter Mengen höherfunktioneller Polyole, wie Trimethylolpropan, Glycerin oder Pentaerythrit, hergestellt werden können. Als mehrwertige Alkohole zur Herstellung der Polyesterpolyole kommen auch aromatische Di- und Polyhydroxylverbindungen in Frage. Die Di- und Polyhydroxylverbindungen können in beliebigen Gemischen eingesetzt werden, wobei die linearaliphatischen und/oder cycloaliphatischen Polyhydroxylverbindungen bevorzugt sind. Anstelle der freien Polycarbonsäuren oder der entsprechenden Polycarbonsäureanhydride können auch entsprechende Polycarbonsäureester niederer Alkohole oder deren Gemische zur Herstellung der Polyester verwendet werden.

Selbstverständlich kann es sich bei den Polyesterpolyolen auch um Homo- oder Mischpolymerisate von Lactonen handeln, die vorzugsweise durch Anlagerung von Lactonen oder Lactongemischen, wie Butyrolacton, ε-Caprolacton und/oder Methyl-ε-caprolacton an geeignete di- und/oder höherfunktionelle Startermoleküle, wie z.B. die vorstehend als Aufbaukomponenten für Polyesterpolyole genannten niedermolekularen, mehrwertigen Alkohole, erhalten werden.

Auch Hydroxylgruppen aufweisenden Polycarbonate kommen als Polyhydroxylkomponenten in Betracht, z.B. solche, die durch Umsetzung von Diolen wie 1,4-Butandiol und/oder 1,6-Hexandiol mit Diarylcarbonaten, z.B. Diphenylcarbonat, Dialkylcarbonat, wie Dimethylcarbonat oder Phosgen hergestellt werden können.

Ganz besonders bevorzugte Verbindungen der Komponente A1) sind Polyesterdiole auf Basis von Adipinsäure und Glykolen wie 1,4-Butandiol, 1,6-Hexandiol und/oder 2,2-Dimethyl-1,3-propandiol (Neopentylglykol) sowie Mischpolymerisate von 1,6-Hexandiol mit ε-Caprolacton und Diphenylcarbonat sowie 1,6-Hexandiol-polycarbonatdiole.

Zusätzlich zu den Polyolen der vorstehend genannten Art kann die Komponente A1) auch bis zu 50 Gew.-% von an sich aus der Polyurethanchemie bekannten Polyetherpolyolen wie z.B. die Polyadditionsprodukte der Styroloxide, des Ethylenoxid, Propylenoxid, Tetrahydrofuran, Butylenoxid, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyole enthalten. Bevorzugt enthält A1) aber keine Polyetherpolyole.

Verbindungen der Komponente A2) sind niedermolekulare Polyole eines zahlenmittleren Molekulargewichtsbereichs Mₙ = 62 bis 499 Dalton. Es kommen beispielsweise die vorstehend zur Herstellung der Polyesterpolyole der Komponente A1) genannten mehrwertigen, insbesondere zweiwertigen Alkohole sowie weiterhin niedermolekulare Polyesterdiole, wie z.B. Adipinsäurebis-(hydroxyethyl)-ester oder kurzkettige mit aromatischen Diolen gestartete Homo- und Mischadditionsprodukte des Ethylenoxid oder des Propylenoxid in Frage.

Ein weiterer Gegenstand der Erfindung ist die Verwendung von Polyhydroxyverbindungen gemäß A1) in Softfeel-Lacken.

Bevorzugte Verbindungen der Komponente A2) sind 1,2-Ethandiol, 1,4-Butandiol, 1,6-Hexandiol, 2,2-Dimethyl-1,3-propandiol, Trimethylolpropan und Glycerin, besonders bevorzugt sind 1,4-Butandiol und 1,6-Hexandiol.

Geeignete, gegebenenfalls mitzuverwendende hydrophile Verbindungen der Komponente A3) haben ein zahlenmittleres Molekulargewicht von mindestens 400 Dalton, bevorzugt von mindestens 500 Dalton und besonders bevorzugt von 1200 bis 4500 Dalton und entsprechen der Formel (I),

H-Y'-X-Y-R (I)

in welcher
- R: für einen einwertigen Kohlenwasserstoffrest mit 1 bis 12 Kohlenstoffatomen, bevorzugt einen unsubstituierten Alkylrest mit 1 bis 4 Kohlenstoffatomen steht,
- X: für eine Polyalkylenoxidkette mit 5 bis 90, bevorzugt 20 bis 70 Monomereinheiten steht und der Ethylenoxidgehalt mindestens 50 Gew.-%, bevorzugt mindestens 65 Gew.-% bezogen auf die Verbindung der Formel (I) ist,
- Y und Y': unabhängig voneinander für Sauerstoff oder -NR'- steht, wobei R' bezüglich seiner Definition R oder Wasserstoff entspricht.

Die Gruppe X kann neben Ethylenoxid- auch Propylenoxid-, Butylenoxid- und/oder Styroloxid-Einheiten enthalten, bevorzugtes Comonomer ist Propylenoxid.

Die Herstellung der vorstehend genannten monofunktionellen, hydrophilen Polyether erfolgt in Analogie zu den in DE-A 2 314 512, 2 314 513 oder US-A 3 905 929, 3 920 598 durch Alkoxylierung eines monofunktionellen Starters wie z.B. n-Butanol oder N-Methyl-butylamin unter Verwendung von Ethylenoxid und gegebenenfalls eines weiteren Alkylenoxids wie z.B. Propylenoxid.

Bevorzugt werden als Verbindungen der Komponente A3) Mischpolymerisate der vorstehend genannten Art aus Ethylenoxid und Propylenoxid mit einem Ethylenoxidanteil größer 50 Gew.-%, besonders bevorzugt von 55 bis 89 Gew.-% bezogen auf die entsprechende Verbindung aus A3) eingesetzt.

Als Verbindungen der Komponente A4) sind beliebige organische Verbindungen einzeln oder in Mischungen untereinander geeignet, die mindestens zwei freie Isocyanatgruppen pro Molekül aufweisen, wie z.B. Diisocyanate X(NCO)₂, wobei X für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoffatomen, einen zweiwertigen aromatischen Kohlenwasserstoffrest mit 6 bis 15 Kohlenstoffatomen oder einen zweiwertigen araliphatischen Kohlenwasserstoffrest mit 7 bis 15 Kohlenstoffatomen steht. Weitere Beispiele von als Diisocyanatkomponente verwendbaren Verbindungen werden z.B. von W. Siefken in Justus Liebigs Annalen der Chemie, 1949, 562, S. 75-136, beschrieben.

Es ist dabei unerheblich, ob diese Isocyanate nach Phosgen- oder phosgenfreien Verfahren hergestellt wurden.

Selbstverständlich können auch die in der Polyurethanchemie an sich bekannten höherfunktionellen Polyisocyanate oder auch an sich bekannte modifizierte, beispielsweise Carbodiimid-, Allophanat-, Isocyanurat-, Urethan-, Biuret- und/oder Iminooxadiazindion-Gruppen aufweisende Polyisocyanate als Verbindungen der Komponente A4) gegebenenfalls anteilig verwendet werden.

Bevorzugt einzusetzen sind Tetramethylendiisocyanat, Methylpentamethylendiisocyanat, Hexamethylendiisocyanat (HDI), Dodecamethylendiisocyanat, 1,4-Diisocyanato-cyclohexan, 1-Isocyanato-3,3,5-trimethyl-5-isocyanatomethyl-cyclohexan (Isophorondiisocyanat, IPDI), 2,4' und/oder 4,4'-Diisocyanato-dicyclohexylmethan, 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, 1,3-Bis-(2-isocyanatopropyl-2)-benzol (TMXDI), 1,3- und 1,4-Diisocyanatomethyl-benzol (XDI), sowie aus diesen Verbindungen bestehende Gemische. Besonders bevorzugt sind Hexamethylendiisocyanat, 1-Isocyanato-3,3,5-trimethyl-5-iso-cyanatomethyl-cyclohexan und 2,4' und/oder 4,4'-Diisocyanato-dicyclohexylmethan oder modifizierte oligomere Polyisocyanate der vorstehend genannten Art.

Als Verbindungen der Komponente A5) kommen aliphatische und/oder alicyclische primäre und/oder sekundäre Polyamine mit mindestens 2 primären oder sekundären Aminofunktionen einzeln oder in Mischungen in Frage. Geeignet sind sowohl niedermolekulare Polyamine wie 1,2-Ethandiamin, 1,6-Hexamethylendiamin, 1-Amino-3,3,5-trimethyl-5-aminomethyl-cyclohexan (Isophorondiamin), Piperazin, 1,4-Diaminocyclohexan, Bis-(4-aminocyclohexyl)-methan, Adipinsäuredihydrazid oder Diethylentriamin sowie Hydrazin oder Hydrazinhydrat als auch Polyetherpolyamine, die formal durch Ersatz der Hydroxylgruppen der oben beschriebenen Polyetherpolyole durch Aminogruppen zustande kommen. Solche Polyetherpolyamine kann man durch Umsetzung der entsprechenden Polyetherpolyole mit Ammoniak und/oder primären Aminen herstellen.

Bevorzugt sind 1,2-Ethandiamin, 1,6-Hexamethylendiamin, 1-Amino-3,3,5-trimethyl-5-aminomethyl-cyclohexan (Isophorondiamin), Piperazin, 1,4-Diaminocyclohexan, Bis-(4-aminocyclohexyl)-methan, Adipinsäuredihydrazid oder Diethylentriamin sowie Hydrazin oder Hydrazinhydrat, besonders bevorzugt sind 1-Amino-3,3,5-trimethyl-5-aminomethyl-cyclohexan (Isophorondiamin), 1,2-Ethandiamin, Piperazin oder Diethylentriamin.

Geeignete Verbindungen der Komponente A6) haben mindestens ein mit Isocyanatgruppen reaktionsfähiges Wasserstoffatom oder mindestens eine Isocyanatgruppe und zugleich mindestens eine ionische Gruppe oder eine potentiell ionische Gruppe.

Beispielsweise handelt es sich hierbei um tertiäre Aminogruppen aufweisende Alkohole, Hydroxycarbonsäuren, Hydroxysulfonsäuren, Aminocarbonsäuren oder Aminosulfonsäuren der bereits in US-B 3 479 310 beispielhaft genannten Art. Anstelle dieser Aufbaukomponenten können auch die entsprechenden salzartigen Derivate, d.h. ihre Quaternierungs- bzw. Neutralisationsprodukte eingesetzt werden. Geeignete Quaternierungs- bzw. Neutralisationsmittel zur Überführung der potentiell ionischen Gruppen in ionische Gruppen sind ebenfalls in US-B 3 479 310 beispielhaft erwähnt. Im Falle der Verwendung von potentiell ionischen Aufbaukomponenten erfolgt die zumindest teilweise Überführung der potentiell ionischen Gruppen in ionische Gruppen durch Quaternierung oder Neutralisation im Anschluss oder während der Herstellung der Polyurethanpolyhamstoffe.

Bevorzugte Verbindungen der Komponente A6) sind solche, die mindestens zwei gegenüber Isocyanatgruppen reaktive Gruppen und mindestens eine ionische Gruppe oder eine potentiell ionische Gruppe enthalten. Besonders bevorzugt sind Verbindungen, welche neben zwei Hydroxyl- oder zwei primären oder sekundären Aminogruppen eine anionische oder potentiell anionische Gruppe enthalten.

Beispiele geeigneter Verbindungen der Komponente A6) sind Carbonsäure- bzw. Carboxylatgruppen-tragende Diole wie 2,2-Bis(hydroxymethyl)alkansäuren wie Dimethylolessigsäure, Dimethylolpropansäure, Dimethylolbuttersäure, Dimethylolpentansäure oder Dihydroxybemsteinsäure sowie Sulfonsäure- oder Sulfonatgruppen-tragende Di- und Polyamine.

Ganz besonders bevorzugt sind Dimethylolpropionsäure und die Alkalisalze der N-(2-Aminoethyl)-2-aminoethansulfonsäure.

Die Herstellung der erfindungsgemäßen Komponente A) kann nach den bekannten Herstellprozessen erfolgen, wie sie beispielsweise D. Dieterich in Houben-Weyl: Methoden der Organischen Chemie. Band E20, S. 1671 bis 1681 beschreibt. Vorzugsweise wird nach dem dort beschriebenen sogenannten Aceton-Prozess verfahren.

Im Aceton- Prozess erfolgt der Aufbau wässriger Zubereitungen ionisch modifizierter Polyurethane und Polyurethanharnstoffe in einem mehrstufigen Verfahren.

In einer ersten Stufe wird aus den Aufbaukomponenten A1) bis A4) und gegebenenfalls A6) ein Isocyanatgruppen enthaltendes Prepolymer aufgebaut. Die Einsatzmengen der Einzelkomponenten werden dabei so bemessen, dass ein Verhältnis von NCO-Gruppen zu der Summe aus OH und NH-Gruppen (Isocyanatkennzahl) von 1,1 bis 3,5, bevorzugt von 1,3 bis 2 resultiert. Der Isocyanatgehalt der so erhaltenen Prepolymere beträgt 1,5 - 7,5 Gew.-%, bevorzugt 2 bis 4,5 Gew.-% und besonders bevorzugt 2,5 bis 3,5 Gew.-%. Weiterhin ist bei der Bemessung der Aufbaukomponenten A1) bis A4) darauf zu achten, dass die rechnerische, zahlenmittlere Funktionalität des herzustellenden Prepolymers 1,80 bis 3,50, bevorzugt 1,95 bis 2,25 beträgt.

In einer zweiten Stufe wird das in Stufe 1 hergestellte Prepolymer in einem organischen, zumindest teilweise wassermischbaren Lösemittel, welches keine isocyanatreaktiven Gruppen trägt, wie beispielsweise Aceton, 2-Butanon, Tetrahydrofuran, Dioxan oder Gemischen dieser Lösemittel, gelöst. Bevorzugtes Lösemittel in diesem Zusammenhang ist Aceton. Die Lösemittelmengen sind dabei so zu bemessen, dass ein Feststoffgehalt von 30 bis 70 Gew.-%, bevorzugt von 35 bis 60 Gew.-%, besonders bevorzugt von 40 bis 55 Gew.-% resultiert.

In einer dritten Stufe wird die isocyanathaltige Prepolymerlösung aus Stufe 2 mit der aminofunktionellen Komponente A5) und ggf. der Komponente A6), sofern letztere in Schritt 1 noch nicht oder nur teilweise zugegeben wurde, unter Kettenverlängerung zum hochmolekularen Polyurethan-Harz umgesetzt. Die Mengen der Komponenten A5) und gegebenenfalls A6) werden dabei so bemessen, dass pro Mol Isocyanatgruppen des gelösten Prepolymeren 0,3 bis 0,93 Mol, bevorzugt 0,5 bis 0,85 Mol isocyanatreaktiven Gruppen der Komponenten A5) und gegebenenfalls A6) entfallen. Die rechnerische, zahlenmittlere Isocyanatfunktionalität des resultierenden ionisch modifizierter Polyurethans bzw. Polyurethanhamstoffs beträgt zwischen 1,55 und 3,10, bevorzugt zwischen 1,90 und 2,35. Das rechnerische, zahlenmittlere Molekulargewicht (Mₙ) beträgt 4500 - 250 000, bevorzugt 10 000 ― 40 000 Dalton.

In einer vierten Stufe wird das hochmolekulare Polyurethan-Harz durch Zugabe von Wasser in Form einer feinteiligen Dispersion ausgefällt. Die Wassermenge wird dabei so bemessen, dass die Zubereitungen nach Schritt 5 einen Feststoffgehalt von 30 bis 70 Gew.-%, bevorzugt von 35 bis 60 Gew.-%, besonders bevorzugt von 40 bis 55 Gew.-% aufweisen.

Sofern potentiell ionische Verbindungen als Aufbaukomponente A6) zum Einsatz kommen, müssen diese vor der Polymerausfällung mit Wasser durch Zugabe geeigneter Basen oder Säuren in die ionische Form überführt werden. Als Basen können tertiäre Amine wie beispielsweise Triethylamin, Triisopropylamin, Ethyldiisopropylamin, Triethanolamin oder Triisopropanolamin oder, jedoch weniger bevorzugt, anorganische Basen wie Alkali- oder Erdalkalihydroxide, - carbonate oder -hydrogencarbonate eingesetzt werden.

In einer fünften Stufe wird enthaltenes organisches Lösungsmittel gegebenenfalls unter vermindertem Druck ganz oder teilweise abdestilliert.

Der Anteil der Komponente A3) beträgt bevorzugt weniger als 10 mol-% bezogen auf die Menge des verwendeten Polyisocyanats A4), um den gewünschten hochmolekularen Aufbau der Polyurethan-Elastomeren zu gewährleisten. Werden mehr als 10 Gew.-% A3) eingesetzt, so ist die Mitverwendung trifunktioneller isocyanatreaktiver Verbindungen als Bestandteil der Komponente A2) von Vorteil.

In einer bevorzugten Ausführungsform der Erfindung zur Herstellung der Komponente A) werden 30,0 bis 83,5 Gew.-Teile der Komponente A1), 0 bis 30 Gew.-Teile, bevorzugt 0 bis 15 Gew.-Teile der Komponente A2), 0 bis 10 Gew.-Teile, bevorzugt 1 bis 10 Gew.-Teile der Komponente A3), 15 bis 50 Gew.-Teile, bevorzugt 20 bis 40 Gew.-Teile der Komponente A4), 0,5 bis 13 Gew.-Teile, bevorzugt 1 bis 5 Gew.-Teile der Komponente A5) und 1 bis 8 Gew.-Teile, bevorzugt 1,5 bis 5,5 Gew.-Teile der Komponente A6) in den vorstehend beschriebenen mehrstufigen Aceton-Prozess eingesetzt, wobei sich die Einsatzmengen der Einzelkomponenten A1) - A6) zu 100 aufsummieren und die erhaltenen polymeren Zwischen- und Endstufen den oben genannten Spezifikationen entsprechen.

In einer besonders bevorzugten Ausführungsform der Erfindung werden die vorstehend genannten Ausgangsmaterialien so bemessen, dass weitgehend hydroxylgruppenfreie ionisch modifizierte Polyurethan- und/oder Polyurethanpolyharnstoff-Dispersionen mit einem Gehalt an ionischen Gruppen von 1,5 bis 50, bevorzugt 3,0 bis 35 und besonders bevorzugt von 3,5 bis 15 mmol/100 g Festkörper erhalten werden und der Gehalt an OH-Gruppen einer OH-Zahl von kleiner 6 mg KOH/g, bevorzugt kleiner 2,5 mg KOH/g entspricht.

In einer ebenfalls besonders bevorzugten Ausführungsform der Erfindung werden die vorstehend genannten Ausgangsmaterialien so bemessen, dass weitgehend hydroxylgruppenfreie ionisch modifizierte Polyurethan- und/oder Polyurethanpolyharnstoff-Dispersionen erhalten werden, die neben ionischen Gruppen 0,1 bis 20 Gew.-%, bevorzugt 0,5 bis 10 Gew.-% und besonders bevorzugt 0,9 bis 4 Gew.-% bezogen auf Festkörper an nichtionisch, hydrophilen Gruppen in Form von Polyethylenoxideinheiten enthalten.

Bei der Herstellung der erfindungsgemäßen Komponente B) wird zunächst ein OH- oder NHfunktionelles Polymer (Polyurethanharz) hergestellt, das anschließend in eine wässrige Dispersion überführt wird.

Die Polymerherstellung erfolgt üblicherweise in Analogie zu EP-A 0 355 682, S. 4, Z. 39 - 45. Dabei wird aus einem oder mehreren Polyisocyanaten gemäß der vorstehenden Definition der Komponente A4) und einer oder mehreren Verbindungen der vorstehenden Definitionen der Komponenten A1) - A3) und A6) ein Isocyanat-funktionelles Prepolymer hergestellt und in einem zweiten Reaktionsschritt durch Reaktion mit Verbindungen gemäß den vorstehenden Definitionen der Komponenten A2) und/oder A5) in nicht-wässrigem Medium ein OH- und/oder NH-funktionelles Polyurethan erhalten.

Das OH- und/oder NH-Gruppen enthaltende Polyurethanharz kann aber auch wie z.B. in EP-A 0 427 028, S.4, Z. 54 - S. 5, Z. 1 beschrieben wird, direkt durch Umsetzung von Verbindungen gemäß den vorstehenden Definitionen der Komponenten A1) bis A6) in nicht-wässrigem Medium hergestellt werden.

Die bei der Herstellung der Komponente B) eingesetzte OH-Komponente gemäß der Definition von A1) kann, muss aber nicht zwingend, einem Destillationsschritt wie A1) unter vermindertem Druck unterzogen werden. Als Destillationsbedingungen werden die gleichen Bedingungen wie vorstehend beschrieben eingestellt.

Die Herstellung des Polyurethanharzes B) durch Reaktion der vorstehend genannten Verbindungen wird normalerweise bei Temperaturen von 0°C bis 140°C, bevorzugt 50 - 130°C, besonders bevorzugt 70 - 110°C, je nach Reaktivität des eingesetzten Isocyanats, durchgeführt. Zusätzlich können auch geeignete Katalysatoren, wie sie in der Polyurethanchemie üblich sind, eingesetzt werden. Beispiele sind tertiäre Amine wie z.B. Triethylamin, oder Diazobicyclooctan, Organozinnverbindungen wie z.B. Dibutylzinnoxid, Dibutylzinndilaurat oder Zinn-bis(2-ethylhexanoat) oder andere metallorganische Verbindungen.

Die Herstellung des Polyurethanharzes wird bevorzugt in Gegenwart von gegenüber Isocyanaten inerten Lösemittels durchgeführt. Hierfür kommen insbesondere solche Lösemittel in Betracht, die mit Wasser verträglich sind, wie beispielsweise Ether, Ketone und Ester sowie N-Methylpyrrolidon. Die Menge dieser Lösungsmittel überschreitet zweckmäßigerweise nicht 30 Gew.-% und liegt bevorzugt im Bereich von 5 bis 25 Gew.-%, jeweils bezogen auf die Summe aus Polyurethanharz B) und Lösemittel.

Die im Polyurethanharz B) eingebauten Säuregruppen können durch Basenzugabe neutralisiert werden. Geeignete Basen sind Amine oder anorganische Basen, wie Ammoniak oder Natrium- bzw. Kaliumhydroxid. Bevorzugt sind tertiäre ggf. OH-gruppenhaltige Amine wie z.B. Trialkylamine mit 1 bis 12, vorzugsweise 1 bis 6 C-Atomen in jedem Alkylrest. Beispielsweise geeignet sind Trimethylamin, Triethylamin, Methyldiethylamin, Tripropylamin, Diisopropylethylamin oder Dialkylmonoalkanol-, Alkyldialkanol- und Trialkanolamine. Bevorzugtes Alkanolamin ist Dimethylethanolamin. Das Neutralisationsmittel wird zumeist im Molverhältnis zu den Säuregruppen des Prepolymers von ca. 0,3:1 bis 1,3:1, vorzugsweise von ca. 0,4:1 bis 1:1 eingesetzt.

Die Neutralisation der COOH-Gruppen wird bei Temperaturen von Raumtemperatur bis + 80°C, bevorzugt von 40 bis 80°C durchgeführt und kann vor, während oder im Anschluss an die Harz-Herstellung erfolgen. Bevorzugt wird der Neutralisationsschritt im Anschluss an die Herstellung durchgeführt.

In der folgenden Stufe wird das hydroxyfunktionelle Polyurethanharz durch Zugabe von Wasser oder durch Eintragen in Wasser in eine wässrige Dispersion überführt.

Die nach dem vorhergehend beschriebenen Verfahren erhältlichen wässrigen Polyurethanharz-Dispersionen (Verbindungen der Komponente B)) besitzen im allgemeinen ein zahlenmittleres Molekulargewicht Mₙ von 1000 bis 30 000 Dalton, vorzugsweise 1 500 bis 10 000 Dalton, eine Säurezahl von 10 bis 80 mg KOH/g, vorzugsweise 15 bis 40 mg KOH/g und einen OH-Gehalt von 0,5 - 5 Gew.-%, bevorzugt 1,0 - 3,5 Gew.-%.

Durch Kombination mit geeigneten Vernetzern C) können, je nach Reaktivität oder gegebenenfalls Blockierung der Vernetzer, sowohl Einkomponentenlacke als auch Zweikomponentenlacke hergestellt werden.

Unter Einkomponentenlacken im Sinne der vorliegenden Erfindung sind dabei Überzugsmittel zu verstehen, bei denen Bindemittelkomponente und Vernetzerkomponente zusammen gelagert werden können, ohne dass eine Vernetzungsreaktion in merklichem bzw. für die spätere Applikation schädlichen Ausmaß stattfindet. Die Vernetzungsreaktion findet erst bei Applikation nach einer Aktivierung des Vernetzers statt. Diese Aktivierung kann z.B. durch Temperatursteigerung bewirkt werden.

Unter Zweikomponentenlacken im Sinne der vorliegenden Erfindung versteht man Überzugsmittel, bei denen Bindemittelkomponente und Vernetzerkomponente aufgrund ihrer hohen Reaktivität in getrennten Gefäßen gelagert werden müssen. Die beiden Komponenten werden erst kurz vor Applikation gemischt und reagieren dann im allgemeinen ohne zusätzliche Aktivierung.

Zur Beschleunigung der Vernetzungsreaktion können aber auch Katalysatoren eingesetzt oder höhere Temperaturen angewendet werden. Geeignete Vernetzer sind beispielsweise Polyisocyanat-Vemetzer, Amid- und Amin-Formaldehydharze, Phenolharze, Aldehyd- und Ketonharze, wie z.B. Phenol-Formaldehydharze, Resole, Furanharze, Harnstoffharze, Carbamidsäureesterharze, Triazinharze, Melaminharze, Benzoguanaminharze, Cyanamidharze, Anilinharze, wie sie in "Lackkunstharze", H. Wagner, H.F. Sarx, Carl Hanser Verlag München, 1971, beschrieben sind.

Bevorzugt werden als Vemetzer C) Polyisocyanate mit freien Isocyanat-Gruppen eingesetzt, da die erhaltenen wässrigen Polyurethanlacke ein besonders hohes lacktechnische Niveau zeigen. Geeignete Vernetzer C) sind beispielsweise] /Lackpolyisocyanate wie Uretdion-, Biuret-, Isocyanurat- oder Iminooxadiazindiongruppen aufweisende Polyisocyanate hergestellt aus Hexamethylendiisocyanat, 1-Isocyanato-3,3,5-trimethyl-5-isocyanatomethyl-cyclohexan (IPDI) oder 2,4' und/oder 4,4'-Diisocyanato-dicyclohexylmethan, wie sie z. B. in J. Prakt. Chem./Chem. Ztg. 1994, 336, 185-200 beschrieben sind. Bevorzugt Verwendung finden dabei die niedrigviskosen Typen wie sie z.B. in EP-A 0 798 299 oder DE-A 198 002 86 beschrieben sind. Auch geeignet wenn auch weniger bevorzugt sind Urethangruppen aufweisende Lackpolyisocyanate auf Basis von 2,4- und/oder 2,6-Diisocyanatotoluol oder 1-Isocyanato-3,3,5-trimethyl-5-isocyanatomethylcyclohexan einerseits und niedermolekularen Polyhydroxylverbindungen wie Trimethylolpropan, den isomeren Propandiolen oder Butandiolen oder beliebigen Gemischen derartiger Polyhydroxylverbindungen andererseits.

Gegebenenfalls können die genannten, freie Isocyanatgruppen enthaltenden Verbindungen durch Umsetzung mit sogenannten Blockierungsmitteln in weniger reaktive Derivate überführt werden, welche dann erst nach Aktivierung beispielsweise bei höheren Temperaturen reagieren. Geeignete Blockierungsmittel für diese Polyisocyanate sind beispielsweise einwertige Alkohole wie Methanol, Ethanol, Butanol, Hexanol, Cyclohexanol, Benzylalkohol, Oxime wie Acetoxim, Methylethylketoxim, Cyclohexanonoxim, Lactame wie ε-Caprolactam, Phenole, Amine wie Diisopropylamin, Benzyl-tert.-butylamin oder Dibutylamin, Dimethylpyrazol oder Triazol sowie Malonsäuredimethylester, Malonsäurediethylester oder Malonsäuredibutylester oder Cyclopentanon-carboxyalkylester.

Bevorzugt ist der Einsatz niedrigviskoser, hydrophober oder hydrophilierter Polyisocyanate mit freien Isocyanatgruppen auf Basis aliphatischer, cycloaliphatischer, araliphatischer und/oder aromatischer Isocyanate, besonders bevorzugt aliphatischer oder cycloaliphatischer Isocyanate, da sich so ein besonders hohes Beständigkeitsniveau des Lackfilms erreichen lässt. Die Vorteile der erfindungsgemäßen Bindemittel-Dispersionen treten in Kombination mit diesen Vernetzern am deutlichsten zutage. Diese Polyisocyanate weisen bei 23°C im allgemeinen eine Viskosität von 10 bis 3500 mPas auf. Falls erforderlich, können die Polyisocyanate in Abmischung mit geringen Mengen an inerten Lösemitteln zum Einsatz gelangen, um die Viskosität auf einen Wert innerhalb des genannten Bereiches abzusenken. Auch Triisocyanatononan kann allein oder in Mischungen als Vernetzerkomponente C) eingesetzt werden.

Die hier beschriebenen Komponenten A) und B) sind im allgemeinen ausreichend hydrophil, so dass die Dispergierbarkeit der Vernetzer C), soweit es sich nicht ohnehin um wasserlösliche oder - dispergierbare Substanzen handelt, gewährleistet ist.

Zusätzlich kann aber auch eine Hydrophilierung des Vernetzers C) erfolgen. Derartige wasserlösliche bzw. dispergierbare, gegebenenfalls blockierte Polyisocyanate sind z.B. durch Modifikation mit Carboxylat-, Sulfonat- und/oder Polyethylenoxidgruppen und/oder Polyethylenoxid/Polypropylenoxidgruppen erhältlich.

Eine Hydrophilierung der Polyisocyanate C) ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A 0 540 985, S. 3, Z 55 - S. 4 Z. 5 beschrieben. Gut geeignet sind auch die in der EP-A-959087, S. 3 Z. 39 ― 51 beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 100 078 21, S. 2 Z. 66 - S. 3 Z. 5, beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE-A 10024624, S. 3 Z. 13 - 33 beschrieben sind. Ebenso möglich ist die Hydrophilierung durch Zusatz handelsüblicher Emulgatoren.

Prinzipiell ist natürlich auch der Einsatz von Mischungen verschiedener Vernetzerharze C) möglich.

Als optionale Komponente D) können lackübliche Hilfs- und Zusatzmittel mitverwendet werden, die sowohl den wässrigen Komponenten A) und B) vor, während oder nach deren Herstellung als auch der Vernetzerkomponente C) zugesetzt werden. Beispiele für derartige Hilfs- und Zusatzstoffe sind z.B. Entschäumungsmittel, Verdickungsmittel, Pigmente, Dispergierhilfsmittel, Mattierungsmittel, Katalysatoren, Hautverhinderungsmittel, Antiabsetzmittel oder Emulgatoren, sowie Additive, die den gewünschten Softfeel-Effekt verstärken können.

Die erfindungsgemäßen wässrigen Beschichtungsmittel können neben den erfindungswesentlichen Komponenten A) bis D) gegebenenfalls auch andere Bindemittel oder Dispersionen, z.B. auf Basis von Polyestern, Polyurethanen, Polyethern, Polyepoxiden oder Polyacrylaten und gegebenenfalls Pigmente und sonstige in der Lackindustrie bekannte Hilfs- und Zusatzstoffe enthalten.

Ein weiterer Gegenstand der Erfindung ist die Verwendung der erfindungsgemäßen, wässrigen Beschichtungsmittel als Anstrich- und Beschichtungssysteme z.B. für mineralische Baustoff-Oberflächen, Lackierung und Versiegelung von Holz und Holzwerkstoffen, Beschichtung metallischer Oberflächen (Metallbeschichtung), Beschichtung und Lackierung asphalt- oder bitumenhaltiger Beläge, Lackierung und Versiegelung diverser Kunststoffoberflächen (Kunststoffbeschichtung) sowie Hochglanzlacke. Insbesondere sind sie aber zur Erzeugung von Softfeel-Effektlacken, die gute Lösemittelbeständigkeit und insbesondere gute Beständigkeit gegen Sonnenmilch (Suntan-Lotion-Test) gewährleisten, geeignet. Bevorzugt werden solche Beschichtungsmitel in der Kunststofflackierung oder der Holzlackierung eingesetzt, wobei die Aushärtung üblicherweise bei Temperaturen zwischen Raumtemperatur und 130°C erfolgt. Die Zweikomponenten-Technologie mit nicht-blockierten Polyisocyanaten als Vernetzer erlaubt dabei die Verwendung vergleichsweise niedriger Aushärtetemperaturen in o.g. Intervall.

Die erfindungsgemäßen, wässrigen Beschichtungsmittel werden üblicherweise in Einschichtlacken oder in der Klar- oder Decklackschicht (oberste Schicht) von Mehrschichtaufbauten eingesetzt.

Die Herstellung der Beschichtung kann nach den unterschiedlichen Spritzverfahren wie beispielsweise Luftdruck-, Airless- oder Elektrostatik-Spritzverfahren unter Verwendung von Einoder gegebenenfalls Zweikomponenten-Spritzanlagen erfolgen. Die Lacke und Beschichtungsmittel, enthaltend die erfindungsgemäßen Bindemitteldispersionen, können jedoch auch nach anderen Methoden, beispielsweise durch Streichen, Rollen oder Rakeln appliziert werden.

### Beispiele

Alle eingesetzten Chemikalien wurden kommerziell erworben und ohne weitere Reinigung eingesetzt.

Alle Prozentangaben sind sofern nicht anders angegeben als Gewichtsprozent zu verstehen.

Die Messung der mittleren Teilchengrößen erfolgte mittels Laserkorrelationsspektroskopie auf einem Zetasizer 1000 der Malvern Instruments Ltd, Worcestershire, GB.

**Die Bestimmung der Auslaufviskosität der Dispersionen erfolgte in Anlehnung an die DIN EN ISO 2431 mittels eines DIN Auslaufbechers mit 4 mm Düse (Fordbecher 4 mm).**

Die Viskositätsmessung erfolgte in Anlehnung an die DIN EN ISO 3219 als Rotationsviskosität bei einer Scherrate von 40 s⁻¹ auf einem Viscolab® LC3 der Paar Physica, Ashland, USA.

Polyurethandispersion I (PUD I): Bayhydrol® PR 240 der Bayer AG, Leverkusen: Hydroxylgruppenfreie, aliphatische Polyesterpolyurethandispersion mit einem Festkörper von 40 ± 1 Gew.-%, einem pH-Wert von ca. 7,0 und einer Auslaufzeit <70 s bei 23°C.

Polyurethandispersion II (PUD II): Bayhydrol® VP LS 2305 der Bayer AG, Leverkusen: Hydroxylgruppenfreie, aliphatische Polyesterpolyurethandispersion mit einem Festkörper von 40 ± 1 Gew.-%, einem pH-Wert von 7,0 und einer Auslaufzeit von 20 s bei 23°C.

Polyurethandispersion III (PUD III): Bayhydrol® XP 2429 der Bayer AG, Leverkusen: Hydroxyfunktionelle, aliphatische Polyesterpolyurethandispersion mit einem Festkörper von 55 ± 2 Gew.-%, einem pH-Wert von 7,0 und einer Viskosität von 600 mPas bei 23°C.

Polyisocyanat I (PIC I): Bayhydur® 3100 der Bayer AG, Leverkusen: Aliphatisches Polyisocyanat mit einem Festkörper von 100 Gew.-%, einer Viskosität von 3800 mPas bei 23°C und einem Isocyanatgehalt von 17,4 %.

### Beispiel 1 (Polyesterdiol I) (nicht erfindungsgemäß)

5400 g eines Mischesters aus Adipinsäure, Hexandiol und Neopentylglykol der OH-Zahl 66 wurden mittels eines konventionellen Labordünnschichtverdampfers bei einer Verdampfertemperatur von 200°C, einem Vakuum von 0,1 mbar mit einer Dosierrate von 300 g/h von niedrig siedenden Komponenten befreit. Die Kondensationstemperatur betrug 50°C.

Man erhielt 5100 g Polyesterdiol I mit einer OH-Zahl von 56.

### Beispiel 2 (Polyesterdiol II) (nicht erfindungsgemäß)

5000 g eines Caprolacton-Hexandiolpolycarbonatdiol-Mischesters mit einem zahlenmittleren Molekulargewicht von 2000 da (OH-Zahl = 56; Desmophen® VP LS 2391, Bayer AG, Leverkusen, DE) wurden mittels eines konventionellen Labordünnschichtverdampfers bei einer Verdampfertemperatur von 180°C, einem Vakuum von 0,1 mbar mit einer Dosierrate von 300 g/h von niedrig siedenden Komponenten befreit. Die Kondensationstemperatur betrug 50°C.

Man erhielt 4920 g Polyesterdiol II mit einer OH-Zahl von 52.

### Beispiel 3 (Polyesterpolyol I) (nicht erfindungsgemäß)

In ein 15 1-Reaktionsgefäß mit Rührer, Heizvorrichtung und Wasserabscheider mit Kühlvorrichtung wurden 1281 g Phthalsäureanhydrid, 5058 g Adipinsäure, 6387 g Hexandiol-1,6 und 675 g Neopentylglykol eingewogen und unter Stickstoff in einer Stunde auf 140°C aufgeheizt. In weiteren 9 Stunden wurde auf 220°C aufgeheizt und so lange bei dieser Temperatur kondensiert, bis eine Säurezahl kleiner 3 erreicht war. Das so erhaltene Polyesterpolyol hatte eine Viskosität (bestimmt als Auslaufzeit einer 80 %igen Lösung des Polyesters in Methoxypropylacetat im DIN 4-Becher bei 23°C) von 54 Sekunden und eine OH-Zahl von 160 mg KOH/g.

### Beispiel 4 (nicht erfindungsgemäß)

In einem 3,6 L-Planschlifftopf ausgestattet mit Heizung, Rückflusskühler und Rührer wurden 420,5 g Polyesterdiol I vorgelegt und 60 Minuten bei 20 mbar und 100°C entwässert. Bei 65°C wurden 4,7 g Hexandiol-1,6 zugegeben und bis zur vollständigen Homogenisierung gerührt. Anschließend wurden 75,5 g Hexamethylendiisocyanat zugegeben und nach Abklingen der Exothermie auf 110°C geheizt. Nach 7 Stunden Reaktionszeit wurde ein konstanter Isocyanatgehalt von 2,8 % (Theorie = 3,3 %) gefunden. Das Prepolymer wurde in 900 g wasserfreiem Aceton gelöst und auf 38°C gekühlt. Durch einen aufgesetzten Tropftrichter wurde eine Lösung aus 11,3 g Na-N-(2-Aminoethyl)-2-aminoethansulfonat und 4,3 g Ethylendiamin in 150g destilliertem Wasser zugegeben. Nach 15 Minuten Reaktionszeit wurde mit 625 g destilliertem Wasser dispergiert. Nach Entfernung des Acetons im Vakuum erhielt man eine feinteilige Dispersion mit 40 ± 1 Gew.-% Festkörper und einem pH von 7,0.

### Beispiel 5 (nicht erfindungsgemäß)

In einem 3,6 L-Planschlifftopf ausgestattet mit Heizung, Rückflusskühler und Rührer wurden 1700 g Polyesterdiol I und 58,5 g eines Polyethermonoalkohols aus n-Butanol, Ethylenoxid und Propylenoxid (im Molverhältnis 83:17) der OH-Zahl 25 vorgelegt und 60 Minuten bei 20 mbar und 100°C entwässert. Anschließend wurde das Vakuum mit Stickstoff gebrochen. Anschließend wurden 250 g 1-Isocyanato-3,3,5-trimethyl-5-isocyanatomethyl-cyclohexan (Isophorondiisocyanat) und 190 g Hexamethylendiisocyanat zugegeben und die Mischung bei 100°C solange gerührt, bis sie einen Isocyanatgehalt von 4,75 % aufwies. Nach dem Abkühlen auf 50-60°C wurden 3900 g wasserfreien Acetons zugegeben. Die acetonische Lösung wurde auf 45°C gekühlt. Anschließend wurde ein Gemisch aus 107 g 1-Amino-3,3,5-trimethyl-5-aminomethyl-cyclohexan (IPDA) in 210 g wasserfreiem Aceton zulaufen gelassen. Nach Abklingen der Exothermie wurden 22 g N-(2-Amino-ethyl)-2-aminoethansulfon-saures Natrium und 5 g Hydrazinmonohydrat gelöst in 250 g Wasser zugegeben. Nach 10-minütigem Nachrühren wurden unter intensivem Rühren 3500 g Wasser langsam eingerührt. Dabei bildete sich eine bläulichweiße Dispersion des Festkörpers in einer Mischung aus Wasser und Aceton. Nach der destillativen Entfernung des Acetons blieb eine wässrige Dispersion mit einem Feststoffgehalt von 40 ± 1 Gew.-%. Die Messung des Teilchendurchmessers mittels Laserkorrelation ergibt einen Wert von 210 nm. Die Dispersion hat eine Auslaufzeit von 22 Sekunden.

### Beispiel 6 (nicht erfindungsgemäß)

In einem 61-Reaktionsgefäß mit Kühl-, Heiz- und Rührvorrichtung wurden in einer Stickstoffatmosphäre 1170 g des Polyesterpolyols I vorgelegt und zusammen mit 1140 g Polyesterdiol **II,** 90 g Trimethylolpropan, 120 g Dimethylolpropionsäure, 125 g N-Methylpyrrolidon und 3,8 g Zinn-(II)-octoat auf 130°C aufgeheizt und 30 min homogenisiert. Anschließend wurde auf 80°C abgekühlt, 480 g Hexamethylendiisocyanat unter kräftigen Rühren zugegeben, unter Ausnutzung der Exothermie auf 140°C aufgeheizt und das Gemisch solange bei dieser Temperatur gehalten, bis sich keine NCO-Gruppen mehr feststellen ließen.

Anschließend wurde das so erhaltene Polyurethan auf 90° - 100°C abgekühlt, 39 g Dimethylethanolamin (Neutralisationsgrad 50 %) zugesetzt, 15 Minuten homogenisiert mit 2270 g demineralisiertem Wasser dispergiert. Die so erhaltene wässrige Polyurethanharz-Dispersion hatte einen OH-Gehalt (100 %ig) von 1,4 %, eine Säurezahl (100 %ig) von 18, eine mittlere Teilchengröße von 120 nm und eine Viskosität von ca. 1700 mPas (23°C; D = 40 s⁻¹) bei einem Festkörpergehalt von 51,3 Gew.-%.

### Beispiele 7 bis 13 (nicht erfindungsgemäß)

VOC- und Fog-Werte ermittelt gemäß der Empfehlung 278 "Thermodesorptionsanalyse organischer Emissionen zur Charakterisierung von nichtmetallischen KFZ-Werkstoffen" des Verbandes der deutschen Automobilindustrie:

| **Beispiel** | **7*** | **8*** | **9*** | **10*** | **11*** | **12** | **13** |
|---|---|---|---|---|---|---|---|
| PUD I | 100 | | | | | | |
| PUD II | | 100 | | | 52,5 | | |
| Beispiel 4 | | | 100 | | | | |
| Beispiel 5 | | | | 100 | | 52,5 | 52,5 |
| PUD III | | | | | 40,5 | 40,5 | |
| Beispiel 6 | | | | | | | 40,5 |
| PIC I | | | | | 7,0 | 7,0 | 7,0 |
| Filmdicke [*µ*m] | 76 | 53 | 59 | 59 | 76 | 84 | 73 |
| VOC [mg/kg] | 324 | 233 | 4 | 8 | 211 | 111 | 61 |
| Fog [mg/kg] | 526 | 526 | 10 | 14 | 480 | 334 | 213 |

| | | | | | | | |
|---|---|---|---|---|---|---|---|
| *nicht erfindungsgemäß | | | | | | | |

### Mengenangaben in Gewichtsteilen.

Vergleicht man die VOC- und Fog-Werte der Beispiele 7 und 8 mit denen der Beispiele 9 und 10, so wird die Verbesserung der erfindungsgemäßen Dispersionen gegenüber dem Stand der Technik augenfällig. Auch beim Standardsystem für wässrige 2K-Softfeelbeschichtungen (Beispiel 11) wird durch teilweisen (Beispiel 12) oder vollständigen (Beispiel 13) Austausch der Aufbaukomponenten durch erfindungsgemäße Komponenten der VOC- bzw. Fog-Wert deutlich verringert.

## Patentansprüche

1. Wässrige Beschichtungsmittel, enthaltend
A) mindestens eine wässrige Zubereitung eines ionisch modifizierten Polyurethans oder/und Polyurethanharnstoffes mit einer OH-Zahl von weniger als 6 mg KOH/g,
B) mindestens eine wässrige Zubereitung eines ionisch modifizierten, Hydroxylgruppen haltigen Polyurethans oder/und Polyurethanharnstoffes und
C) mindestens einen Vernetzer,
D) gegebenenfalls Hilfsmittel und Zusatzstoffe
**dadurch gekennzeichnet, dass** die Komponente A) aufgebaut ist aus
A1) einer oder mehreren Polyhydroxylverbindungen mit einem zahlenmittleren Molekulargewicht (Mₙ) ≥ 500 Dalton und einer OH-Funktionalität von ≥ 1,5, von denen mindestens eine bei einer Temperatur ≥150°C und einem Druck ≥10 mbar von unter diesen Destillationsbedingungen flüchtigen Komponenten befreit wurde,
A2) gegebenenfalls einer oder mehreren Polyhydroxylverbindungen mit einem zahlenmittleren Molekulargewicht (Mₙ) von 62 bis 499 Dalton und einer OH-Funktionalität von ≥ 2,
A3) gegebenenfalls einer oder mehreren hydrophilen Verbindungen mit einem Ethylenoxidgehalt größer 50 Gew.-% und einem zahlenmittleren Molekulargewicht (Mₙ) größer 400 Dalton, die mindestens eine NCO-reaktive Gruppe aufweisen,
A4) einem oder mehreren Polyisocyanaten,
A5) gegebenenfalls einem oder mehreren aliphatischen Polyaminen mit einem zahlenmittleren Molekulargewicht (Mₙ) von 60 bis 300 Dalton und mindestens zwei primären oder sekundären Aminogruppen oder Hydrazin und
A6) einer oder mehreren Verbindungen, die mindestens ein mit NCO-Gruppen reaktives Wasserstoffatom oder mindestens eine NCO-Gruppe und zugleich mindestens eine ionische oder potentiell ionische Gruppe aufweisen und verschieden von den vorstehend genannten Verbindungen der Komponenten A1) - A5) sind.

2. Wässrige Beschichtungsmittel gemäß Anspruch 1, **dadurch gekennzeichnet, dass** als Verbindungen der Komponente A1) organische Verbindungen auf Polyester-, Polylacton- oder Polycarbonat-Basis mit einem zahlenmittleren Molekulargewicht von 500 - 10.000 Dalton und einer mittleren OH-Funktionalität von 1,5 bis 6 eingesetzt werden.

3. Wässrige Beschichtungsmittel gemäß Anspruch 1 oder 2, **dadurch gekennzeichnet, dass** als Verbindungen der Komponente A2) niedermolekulare Polyole eines zahlenmittleren Molekulargewichts von 62 bis 499 Dalton eingesetzt werden.

4. Wässrige Beschichtungsmittel gemäß einem der Ansprüche 1 - 3, **dadurch gekennzeichnet, dass** die Verbindungen der Komponente A3) monohydroxyfunktionelle Polyether auf Ethylenoxid- oder Ethylenoxid-Propylenoxid-Basis sind.

5. Wässrige Beschichtungsmittel gemäß einem der Ansprüche 1-4, **dadurch gekennzeichnet, dass** in Komponente A6) Verbindungen mit zwei Hydroxyl- oder primären oder sekundären Aminogruppen sowie einer anionischen oder potentiell anionischen Gruppe engesetzt werden.

6. Beschichtungen erhältlich aus wässrigen Beschichtungsmitteln gemäß einem der Ansprüche 1-5.

7. Substrate beschichtet mit Beschichtungen gemäß Anspruch 6.

8. Verwendung wässrigen Bindemitteln gemäß Anspruch 1, zur Herstellung von Softfeel-Lacken.

## Claims

1. Aqueous coating compositions comprising
A) at least one aqueous formulation of an ionically modified polyurethane and/or polyurethaneurea having an OH number of less than 6 mg KOH/g,
B) at least one aqueous formulation of an ionically modified, hydroxyl-containing polyurethane and/or polyurethaneurea and
C) at least one crosslinker,
D) optionally auxiliaries and additives
**characterized in that** component A) is synthesized from
A1) one or more polyhydroxyl compounds having a number-average molecular weight (Mₙ) ≥ 500 daltons and an OH functionality of ≥ 1.5, of which at least one has been freed at a temperature ≥150°C and a pressure ≤10 bar from components volatile under these distillation conditions,
A2) optionally one or more polyhydroxyl compounds having a number-average molecular weight (Mₙ) of from 62 to 499 daltons and an OH functionality of ≥ 2,
A3) optionally one or more hydrophilic compounds having an ethylene oxide content of more than 50% by weight and a number-average molecular weight (Mₙ) of more than 400 daltons, which contain at least one NCO-reactive group,
A4) one or more polyisocyanates,
A5) optionally one or more aliphatic polyamines having a number-average molecular weight (Mₙ) of from 60 to 300 daltons and at least two primary or secondary amino groups or hydrazine and
A6) one or more compounds containing at least one NCO-reactive hydrogen atom or at least one NCO group and simultaneously at least one ionic or potentially ionic group and different from the aforementioned compounds of components A1) - A5).

2. Aqueous coating compositions according to Claim 1, **characterized in that** organic compounds based on polyester, polylactone or polycarbonate having a number-average molecular weight of 500 - 10 000 daltons and an average OH functionality of from 1.5 to 6 are used as compounds of component A1).

3. Aqueous coating compositions according to Claim 1 or 2, **characterized in that** low molecular mass polyols with a number-average molecular weight of from 62 to 499 daltons are used as compounds of component A2).

4. Aqueous coating compositions according to one of Claims 1 - 3, **characterized in that** the compounds of component A3) are monohydroxy-functional polyethers based on ethylene oxide or on ethylene oxide-propylene oxide.

5. Aqueous coating compositions according to one of Claims 1 - 4, **characterized in that** in component A6) compounds having two hydroxyl or primary or secondary amino groups and also one anionic or potentially anionic group are used.

6. Coatings obtainable from aqueous coating compositions according to one of Claims 1 - 5.

7. Substrates coated with coatings according to Claim 6.

8. Use of aqueous binders according to Claim 1, for producing soft feel coating materials.

## Revendications

1. Agent de revêtement aqueux, contenant :
A) au moins une préparation aqueuse d'un polyuréthanne et/ou d'une polyuréthanne-urée à modification ionique ayant un indice OH inférieur à 6 mg/KOH,
B) au moins une préparation aqueuse d'un polyuréthanne et/ou d'une polyuréthanne-urée contenant des radicaux hydroxyle, à modification ionique, et
C) au moins un agent de réticulation,
D) le cas échéant, des auxiliaires et des additifs,
**caractérisé en ce que** le composant A) est élaboré à partir de
A1 un ou plusieurs composés polyhydroxylés avec un poids moléculaire moyen en nombre (Mn) ≥ 500 Dalton et une fonctionnalité OH de ≥ 1,5, qui a été libéré d'au moins un composant volatilisable à une température ≥ 150°C et une pression ≤ 10 mbar, des composants volatilisables dans ces conditions de distillation,
A2) le cas échéant, un .ou plusieurs composés polyhydroxylés ayant un poids moléculaire moyen en nombre (Mn) allant de 62 à 499 Dalton et une fonctionnalité OH ≥ 2,
A3) le cas échéant, un ou plusieurs composés hydrophiles avec une teneur en oxyde d'éthylène supérieure à 50% en poids et ayant un poids moléculaire moyen en nombre (Mn) supérieur à 400 Dalton, qui présente au moins un radical réagissant avec NCO,
A4) un ou plusieurs polyisocyanates,
A5) le cas échéant, une ou plusieurs polyamines aliphatiques ayant un poids moléculaire moyen en nombre (Mn) allant de 60 à 300 Dalton et au moins deux radicaux amino primaires ou secondaires ou une hydrazine, et
A6) un ou plusieurs composés, qui présentent au moins un atome d'hydrogène réagissant avec les radicaux NCO ou au moins un radical NCO et également, au moins un radical ionique ou potentiellement ionique et qui sont différents des composés cités précédemment des composants A1)-A5).

2. Agent de revêtement aqueux selon la revendication 1, **caractérisé en ce que** comme composés du composant A1), on met en oeuvre des composés organiques à base de polyester, polylactone ou polycarbonate ayant un poids moléculaire moyen en nombre allant de 500 à 10 000 Dalton et une fonctionnalité OH moyenne allant de 1,5 à 6.

3. Agent de revêtement aqueux selon la revendication 1 ou 2, **caractérisé en ce que** comme composés du composant A2), on met en oeuvre des polyols de faible poids moléculaire, ayant un poids moléculaire moyen en nombre allant de 62 à 499 Dalton.

4. Agent de revêtement aqueux selon l'une des revendications 1 à 3, **caractérisé en ce que** les composés du composant A3) sont des polyéthers monohydroxyfonctionnels à base d'oxyde d'éthylène ou d'oxyde d'éthylène-oxyde de propylène.

5. Agent de revêtement aqueux selon l'une des revendications 1 à 4, **caractérisé en ce que** dans le composant A6), on met en oeuvre des composés ayant deux radicaux hydroxyle ou amino primaires ou secondaires, ainsi qu'un radical anionique ou potentiellement anionique.

6. Revêtement pouvant être obtenu à partir des agents de revêtement aqueux selon l'une des revendications 1 à 5.

7. Substrat enduit du revêtement selon la revendication 6.

8. Utilisation de liants aqueux selon la revendication 1, pour la préparation de laques 'softfeel'.
